(19) Europäisches Patentamt / European Patent Office / Office européen des brevets

(11) **EP 3 374 755 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(21) Anmeldenummer: **16794945.2**

(22) Anmeldetag: **11.10.2016**

(51) Int Cl.:
*G01N 21/41* (2006.01)    *G02B 21/00* (2006.01)
*G02B 21/24* (2006.01)    *G02B 21/36* (2006.01)
*G01N 21/27* (2006.01)

(86) Internationale Anmeldenummer:
**PCT/EP2016/074313**

(87) Internationale Veröffentlichungsnummer:
**WO 2017/080737 (18.05.2017 Gazette 2017/20)**

(54) **LICHTMIKROSKOP UND VERFAHREN ZUM BESTIMMEN EINER WELLENLÄNGENABHÄNGIGEN BRECHZAHL EINES PROBENMEDIUMS**

LIGHT MICROSCOPE AND METHOD FOR DETERMINING A WAVELENGTH-DEPENDENT REFRACTIVE INDEX OF A SAMPLE MEDIUM

MICROSCOPE OPTIQUE ET PROCÉDÉ DE DÉTERMINATION D'UN INDICE DE RÉFRACTION, DÉPENDANT DE LA LONGEUR D'ONDE, D'UN MILIEU ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2015 DE 102015119258**

(43) Veröffentlichungstag der Anmeldung:
**19.09.2018 Patentblatt 2018/38**

(73) Patentinhaber: **Carl Zeiss Microscopy GmbH 07745 Jena (DE)**

(72) Erfinder:
• **BERGTER, Annette 07743 Jena (DE)**
• **LIPPERT, Helmut 07745 Jena (DE)**

(74) Vertreter: **Ridderbusch, Oliver Prisma IP Patentanwaltskanzlei Landshuter Allee 10 80637 München (DE)**

(56) Entgegenhaltungen:
**CN-A- 101 082 577    CN-A- 101 701 912
CN-U- 203 455 276    DE-A1-102011 081 192
US-A1- 2004 197 927    US-A1- 2004 233 452
US-A1- 2015 286 042**

• **QIANG LI AND XIAOYUN PU: "Measurement of the refractive index of microquantity liquid filled in a capillary and a capillary wall without destruction", APPLIED OPTICS, OPTICAL SOCIETY OF AMERICA, WASHINGTON, DC; US, Bd. 52, Nr. 21, 20. Juli 2013 (2013-07-20) , Seiten 5318-5326, XP001583465, ISSN: 0003-6935, DOI: HTTP://DX.DOI.ORG/10.1364/AO.52.005318**

**Beschreibung**

Die vorliegende Erfindung bezieht sich in einem ersten Aspekt auf ein Verfahren zum Bestimmen einer wellenlängenabhängigen Brechzahl eines Probenmediums, das mit einem Lichtmikroskop untersucht wird.

Im vorliegenden Text kann der Begriff "Probenmedium" das Medium, beispielsweise eine Flüssigkeit, betreffen, in welches später eine zu untersuchende Probe zugegeben wird. Der Begriff "Probenmedium" kann aber auch das Medium mit bereits hinzugegebener Probe umfassen.

In einem zweiten Gesichtspunkt betrifft die Erfindung ein Lichtmikroskop nach dem Anspruch 14.

Grundsätzlich existiert eine Vielzahl verschiedener Arten von Lichtmikroskopen zur Untersuchung von Proben. Allgemein wird dabei eine Probe, welche sich in dem Probenmedium befindet, mit Beleuchtungslicht beleuchtet und von der Probe kommendes Detektionslicht wird nachgewiesen.

So umfasst ein gattungsgemäßes Lichtmikroskop eine Beleuchtungslichtquelle zum Aussenden von Beleuchtungslicht in Richtung eines zu untersuchenden Probenmediums. Zudem umfasst ein gattungsgemäßes Lichtmikroskop ein Objektiv und eine Kameraeinrichtung zum Messen von vom Probenmedium kommendem Detektionslicht.

Die Ausbreitung des Beleuchtungslichts sowie des Detektionslichts im Probenmedium hängt maßgeblich von der Brechzahl des Probenmediums ab. Die Brechzahl wird vorliegend auch als refraktiver Index oder Brechungsindex bezeichnet. Die Brechzahl kann auch wellenlängenabhängig sein. In der Regel ist ein Lichtmikroskop für eine bestimmte Brechzahl ausgelegt oder für eine Brechzahlverteilung, bei welcher auch die Brechzahl eines verwendeten Deckglases berücksichtigt wird. Lichtmikroskope können auch für eine wellenlängenabhängige Brechzahl ausgelegt sein, das heißt die optischen Eigenschaften des Lichtmikroskops sind wellenlängenabhängig so gestaltet, dass Beleuchtungs- und/oder Detektionslicht verschiedener Wellenlängen einen gleichen oder ähnlichen Strahlengang hat. Insbesondere können achromatische oder apochromatische Objektive verwendet werden.

Wird ein Probenmedium verwendet, auf dessen Brechzahl das Lichtmikroskop nicht angepasst ist, beeinträchtigt dies die Messqualität. Beispielsweise kann durch Abbildungsfehler die Schärfe verschlechtert sein oder es können Farbfehler auftreten.

Um diese Problematik zu vermeiden, werden spezielle Probenmedien mit bekannter wellenlängenabhängiger Brechzahl verwendet. Diese können jedoch mit hohen Kosten verbunden sein. Zudem ist die Brechzahl in der Regel nur für das Probenmedium auf seinen gewünschten Wert eingestellt worden, bevor in dieses die eigentliche Probe gegeben wurde. Falls die Probe selbst eine Auswirkung auf die Brechzahl hat, bleibt dies typischerweise unberücksichtigt.

Zwar kann grundsätzlich die Brechzahl des Probenmediums vorab ermittelt werden. Hieraus folgt aber apparativ und zeitlich ein zusätzlicher Aufwand für einen Benutzer. In "Measurement of the refractive index of microquantity liquid filled in a capillary and a capillary wall without destruction", von QIANG LI und XIAOYUN PU, erschienen in APPLIED OPTICS, OPTICAL SOCIETY OF AMERICA, WASHINGTON, DC; US, Bd. 52, Nr. 21, 20. Juli 2013, Seiten 5318-5326, wird beispielsweise ein Messgerät zur Bestimmung der Brechzahl eines Probenmediums beschrieben. Hierzu wird das Probenmedium in ein zylindrisches Gefäß gefüllt und mit einem parallelen Lichtstrahl beleuchtet. Die Zylinderform hat die Wirkung einer Sammellinse, wodurch hinter dem Gefäß das Beleuchtungslicht eine Fokuslinie bildet. Der Ort der Fokuslinie hängt von der Brechzahl des Probenmediums ab. Ein Mikroskop wird verwendet, um den Ort der Fokuslinie zu bestimmen, womit die Brechzahl abgeleitet und für spätere Messungen berücksichtigt werden kann. In ähnlicher Weise beschreiben CN 101 701 912 A und CN 101 082 577 A ein zylindrisches Gefäß, um einen parallelen Lichtstrahl hinter dem Probengefäß zu fokussieren und hierüber die Brechzahl des Probenmediums abzuleiten.

In der Praxis werden daher sehr häufig Messungen mit Lichtmikroskopen durchgeführt, wobei die Brechzahl des Probenmediums unbekannt ist und von einem idealen Wert abweicht, bei dem eine bestmögliche Bildqualität gegeben wäre.

Nachfolgend wird ein Anwendungsfall geschildert, bei dem die oben beschriebene Problematik besonders zu tragen kommt. Eine wichtige Gruppe von Lichtmikroskopen sind Lichtblatt-Fluoreszenzmikroskope, englisch: Light sheet fluorescence microscopes. Bei diesen steht ein Beleuchtungsstrahlengang quer, in der Regel senkrecht, zu einem Detektionsstrahlengang. Dazu kann ein Beleuchtungsobjektiv senkrecht zu einem Detektionsobjektiv angeordnet sein. Alternativ können der Beleuchtungsstrahlengang und der Detektionsstrahlengang auch quer zueinander durch ein einziges Objektiv verlaufen. Beleuchtungslicht wird flächenartig in das Probenmedium geleitet. Dies wird als Lichtblatt bezeichnet. Der Detektionsstrahlengang steht quer oder senkrecht auf dem Lichtblatt. In diesem flächenartigen beleuchteten Bereich werden Fluorophore in der Probe angeregt. Bei dem nachzuweisenden Detektionslicht handelt es sich daher bei diesem Beispiel um Fluoreszenzlicht. Oft werden als Probenmedien wässrige Lösungen mit einem Brechungsindex n nahe dem von Wasser, also n = 1,33, verwendet. In einer ähnlichen Größenordnung liegt oft auch der idealisierte Brechungsindex der Probe. Für diesen Fall sind das Beleuchtungsobjektiv und das Detektionsobjektiv in der Regel abgestimmt und erzeugen scharfe Probenbilder. Probleme entstehen aber, wenn die Probe beispielsweise chemisch geklärt wird, um sie transparent für Fluoreszenzmessungen tiefer Gewebeschichten zu machen. Die Brechzahl n und die Wellenlängenabhängigkeit der Brechzahl n(lambda), also die Dispersion, können dadurch stark abweichen von der Brechzahl und Dispersion von Wasser. Um Brechungsindex-Sprünge zu vermeiden, wird daher in der Regel ein Probenmedium verwendet, dessen Brechungsindex an den Brechungsindex der Probe angepasst ist. Zum Beispiel kann das Probenmedium direkt einem verwendeten Klärmedium entsprechen. Detektions- und Beleuchtungsobjektiv werden hierauf optisch abgestimmt. Die wellenlängenabhängige Brechzahl hängt jedoch im Allgemeinen stark von der jeweiligen Rezeptur des Probenmediums ab. Bei einer individuellen Herstellung des Probenmediums im Labor kann die wellenlängenabhängige Brechzahl auch von Charge zu Charge variieren. Dies hat negative Auswirkungen auf sowohl den Beleuchtungs- als auch den Detektionsstrahlengang. Zwar verfügen manche Lichtmikroskope über Corr-Ringe oder andere Korrekturmittel, um das Lichtmikroskop auf eine andere Brechzahl eines Probenmediums anzupassen. Solche Maßnahmen können aber nur sinnvoll erfolgen, wenn die Brechzahl des momentan untersuchten Probenmediums bekannt ist. Dies ist in der Regel nicht der Fall.

Als eine **Aufgabe** der Erfindung kann angesehen werden, ein Lichtmikroskop und ein Verfahren anzugeben, durch welche in möglichst einfacher Weise eine wellenlängenabhängige Brechzahl eines Probenmediums ermittelt werden kann.

Diese Aufgabe wird durch das Verfahren mit den Merkmalen des Anspruchs 1 und durch das Lichtmikroskop mit den Merkmalen des Anspruchs 14 gelöst.

Vorteilhafte Varianten des erfindungsgemäßen Lichtmikroskops und des erfindungsgemäßen Verfahrens sind Gegenstand der abhängigen Ansprüche und werden außerdem in der folgenden Beschreibung erläutert.

Bei dem Verfahren zum Bestimmen einer wellenlängenabhängigen Brechzahl eines Probenmediums, das mit einem Lichtmikroskop untersucht wird, ist vorgesehen, dass:

- mit dem Lichtmikroskop eine Probenmessung an dem Probenmedium, welches eine unbekannte Brechzahl hat, durchgeführt wird, wobei für die Probenmessung Beleuchtungslicht auf das Probenmedium gestrahlt wird und vom Probenmedium kommendes Detektionslicht, welches insbesondere durch Streuung und/oder Fluoreszenz im Probenmedium generiert wird, gemessen wird;
- durch die Probenmessung eine Fokusposition (nachfolgend: Probenmessungs-Fokusposition) des Beleuchtungs- und/oder Detektionslichts gemessen wird,
- ein mathematisches Modell, in dem eine Fokusposition von Beleuchtungs- und/oder Detektionslicht abhängig von einer Brechzahl eines Mediums ausgedrückt wird, verwendet wird, um aus der Probenmessungs-Fokusposition auf die Brechzahl des Probenmediums zu schließen.

Bei dem Lichtmikroskop der oben genannten Art sind Steuer- und Auswertemittel vorgesehen. In diesen ist ein mathematisches Modell hinterlegt, in dem eine Fokusposition von Beleuchtungs- und/oder Detektionslicht abhängig von einer Brechzahl eines Mediums ausgedrückt wird. Die Steuer- und Auswertemittel sind dazu eingerichtet, aus einer einzugebenden Fokusposition zu einem zu untersuchenden Probenmedium und mit Hilfe des mathematischen Modells eine Brechzahl des Probenmediums zu ermitteln.

Als ein wesentlicher Gedanke des Verfahrens wird zunächst eine Fokusposition des Beleuchtungs- und/oder Detektionslichts ermittelt. Diese Probenmessungs-Fokusposition ist abhängig von der Brechzahl des Probenmediums. Im Übrigen ist diese Fokusposition von Eigenschaften des Lichtmikroskops abhängig, welche insbesondere vorab ermittelt sein können, z.B. durch Kalibrierung mit einem bekannten Probenmedium. Dadurch erlaubt die Kenntnis der Probenmessungs-Fokusposition einen direkten Rückschluss auf die Brechzahl des Probenmediums.

In entsprechender Weise können die Steuer- und Auswertemittel des Lichtmikroskops dazu eingerichtet sein,

- eine Probenmessung an einem Probenmedium unbekannter Brechzahl durchzuführen,
- mittels der Probenmessung eine Probenmessungs-Fokusposition des Beleuchtungs- und/oder Detektionslichts im Probenmedium zu ermitteln,
- die ermittelte Probenmessungs-Fokusposition als einzugebende Fokusposition zum Ermitteln der Brechzahl des Probenmediums zu verwenden.

Die beschriebenen Verfahren lassen sich auch direkt zu Messungen an einem Probenmedium, welches die Probe bereits enthält, verwenden.

Als ein wesentlicher Vorteil kann daher das Lichtmikroskop, mit dem die eigentliche Probenuntersuchung erfolgen soll, zum Bestimmen oder Ableiten der Brechzahl verwendet werden. Separate oder zusätzliche Messvorrichtungen sind hierfür nicht notwendig. Vielmehr wird erfindungsgemäß direkt im Probenraum der Brechungsindex ermittelt.

Ein weiterer wichtiger Vorteil kann darin gesehen werden, dass die Brechzahl des Probenmediums, so wie es im Lichtmikroskop eingesetzt wird, ermittelt werden kann. Somit kann das untersuchte Medium auch tatsächlich die Probe enthalten, das heißt, die Messung muss nicht während oder vor der Probenpräparation zu einem Zeitpunkt erfolgen, an dem die Probe noch nicht in das Probenmedium gegeben wurde. Alternativ kann aber auch die Brechzahl des Probenmediums ermittelt werden, bevor die Probe hinzugegeben wird. Insbesondere kann für die Bestimmung des Brechungsindex dasselbe Probengefäß wie für spätere Messungen am Lichtmikroskop verwendet werden. Dies ist vorteilhaft, weil das Probengefäß selbst eine Auswirkung auf die Brechung haben kann. Unter der Formulierung "wellenlängenabhängige Brechzahl des Probenmediums" kann daher auch die wellenlängenabhängige Brechzahl der Kombination aus Probenmedium und Probengefäß angesehen werden.

Die ermittelte Brechzahl des Probenmediums kann sodann ausgegeben werden, beispielsweise über einen Bildschirm oder eine Datenschnittstelle an einen Benutzer. Alternativ oder zusätzlich kann auch abhängig von der ermittelten Brechzahl des Probenmediums eine bestimmte Handlungsanweisung zur Änderung einer Mikroskopeinstellung an einen Benutzer oder an die Steuer- und Auswertemittel ausgegeben werden. Mögliche Handlungsanweisungen können in Speichermitteln abhängig von Brechzahlen hinterlegt sein. Bei den Handlungsanweisungen kann es sich beispielsweise um eine Verstellung einer Zoom-Optik, des Beleuchtungsobjektivs, des Detektionsobjektivs, einen Austausch des momentan verwendeten Probengefäßes oder eine Änderung einer optischen Komponente des Lichtmikroskops handeln. Alternativ können die Steuer- und Auswertemittel auch dazu eingerichtet sein, diese Handlungsanweisung selbst oder automatisch umzusetzen. Durch diese Handlungen kann ein Strahlengang des Beleuchtungs- und/oder Detektionslichts beeinflusst werden, womit insbesondere die Wirkung einer Abweichung der Brechzahl des untersuchten Probenmediums von einer idealen Brechzahl, für welche das Lichtmikroskop mit den momentan verwendeten Komponenten ausgelegt ist, zumindest teilweise kompensiert werden kann.

Um aus der Fokusposition auf die Brechzahl zu schließen, kann jedes prinzipiell geeignete mathematische Modell verwendet werden. Beispielsweise kann das mathematische Modell durch eine Gleichung gebildet sein, in welcher eine Fokusposition linear von einer Brechzahl plus einer Konstanten abhängt. Die Probenmessungs-Fokusposition, die bei folgenden Beispielen auch als Zmax bezeichnet wird, hängt somit von der Brechzahl $n1$ und einer Konstanten, die auch als offset bezeichnet wird, in folgender Weise ab: $Zmax = c*n1 + offset$. Dabei sind "c" und "offset" Konstanten, welche vom Lichtmikroskop abhängen, beispielsweise von einer Zoomeinstellung oder einer numerischen Apertur eines verwendeten Objektivs. Sind die Konstanten c und Offset bekannt, so kann aus der Fokusposition Zmax auf die Brechzahl $n1$ für die momentan verwendeten Lichtwellenlänge(n) geschlossen werden.

Wird die Probenmessung bei anderen Wellenlängen ausgeführt, kann in gleicher Weise wiederum für diese Wellenlängen die Brechzahl abgeleitet werden.

Die vorgenannte Gleichung kann grundsätzlich um weitere Terme ergänzt werden, etwa um einen Ausdruck mit quadratischer Abhängigkeit von der Brechzahl. Hierdurch sind prinzipiell genauere Ergebnisse möglich, jedoch müssen auch weitere vom Lichtmikroskop abhängige Konstanten vorab ermittelt werden. Damit nur wenige Werte zu bestimmen sind, kann es vorteilhaft sein, wenn gemäß der Gleichung die Kalibriermessungs-Fokusposition gerade gleich der Konstanten "Offset" plus einer linearen Abhängigkeit von der Brechzahl ist. Zur weiteren Vereinfachung der Gleichung kann auch der Offset auf null gesetzt sein, womit jedoch die Genauigkeit der Ableitung der Brechzahl beeinträchtigt wird.

Ein oder mehrere Parameter dieses mathematischen Modells, beispielsweise die Konstante c oder auch der Offset, können durch eine Kalibriermessung ermittelt werden. Diese Parameter sind vom jeweiligen Lichtmikroskop und insbesondere einer momentanen Konfiguration des Lichtmikroskops abhängig.

So wird bei einer bevorzugten Ausführungsform zum Bestimmen von mindestens einem Parameter des mathematischen Modells mindestens eine Kalibriermessung mit dem Lichtmikroskop durchgeführt, in welcher:

- ein Medium bekannter Brechzahl (anstelle des Probenmediums mit unbekannter Brechzahl) mit Beleuchtungslicht beleuchtet wird,
- von dem Medium bekannter Brechzahl kommendes Detektionslicht zur Aufnahme von mindestens einem Mikroskopbild gemessen wird und
- aus dem mindestens einen Mikroskopbild eine Kalibriermessungs-Fokusposition des Beleuchtungs- und/oder des Detektionslichts ermittelt wird (das heißt eine in der Kalibriermessung ermittelte Fokusposition des Beleuchtungs- und/oder Detektionslichts).

Sodann kann mit Hilfe der bekannten Brechzahl und der ermittelten Kalibriermessungs-Fokusposition mindestens ein Parameter des mathematischen Modells berechnet werden.

Pro Kalibriermessung kann grundsätzlich ein Parameter berechnet werden. Wird beispielsweise das vorgenannte Modell $Zmax = c*n1 + offset$ verwendet, so wird in einer Kalibriermessung Zmax gemessen oder ermittelt und $n1$ ist bekannt, da ein Medium mit bekannter Brechzahl $n1$ in der Kalibriermessung verwendet wird. Ist auch die Konstante Offset vorab bekannt, beispielsweise vom Mikroskophersteller angegeben oder durch eine andere Messung ermittelt, so kann nun mit einer einzigen Kalibriermessung auf die Konstante c geschlossen werden.

Um die Konstanten c und Offset zu ermitteln, können auch zwei (oder mehr) Kalibriermessungen durchgeführt werden.

Werden mindestens zwei Kalibriermessungen durchgeführt, unterscheiden sich diese vorzugsweise in einer oder mehreren der folgenden Weisen:

- verschiedene Medien mit jeweils bekannter Brechzahl werden verwendet;
- verschiedene Probengefäße werden verwendet, deren Geometrie sich in bekannter Weise voneinander unterscheidet;
- verschiedene Mikroskopeinstellungen werden verwendet, welche die Kalibriermessungs-Fokusposition beeinflussen.

Damit unterschiedliche Kalibriermessungen sinnvoll sind, sollte bekannt sein, wie sich der zwischen den Kalibriermessungen unterscheidende Faktor auf den Beleuchtungs- und/oder Detektionsstrahlengang auswirkt. Aus dieser Kenntnis kann mit bekannten optischen Berechnungen ermittelt werden, welche Auswirkung dieser Faktor auf die Parameter des verwendeten mathematischen Modells hat. Beispielsweise können für unterschiedliche Kalibriermessungen verschiedene Probengefäße verwendet werden, die aufgrund ihrer unterschiedlichen Geometrie Licht unterschiedlich brechen oder beeinflussen. Diese Beeinflussung kann berechnet werden. Daher können sich bei zwei Kalibriermessungen mit unterschiedlichen Probengefäßen die Parameter des Modells, beispielsweise die Konstante c und/oder der Offset, unterscheiden; dabei können aber aus den Parametern von einer Kalibriermessung die Parameter von der anderen Kalibriermessung abgeleitet werden. Gleiches gilt, wenn verschiedene Mikroskopeinstellungen verwendet werden, die nachfolgend näher beschrieben werden.

Unterscheiden sich die Kalibriermessungen durch unterschiedliche verwendete Medien bekannter Brechzahl, so hat dies keine Auswirkung auf die Parameter des Modells, also bei obigem Beispiel die Konstanten c und Offset. Vielmehr können hier durch zwei Messungen zwei Fokuspositionen Zmax1 und Zmax2 für die beiden Brechzahlen n1 und n2 der beiden Medien unbekannter Brechzahl ermittelt werden. Mit den Gleichungen

$$Zmax1 = c*n1 + offset$$

und

$$Zmax2 = c*n2 + offset$$

für die erste und zweite Kalibriermessung können sodann die Konstanten c und Offset berechnet werden.

Die verschiedenen Mikroskopeinstellungen, welche für die mindestens zwei Kalibriermessungen verwendet werden, können sich insbesondere in einer oder mehreren der folgenden Weisen unterscheiden:

- die Mikroskopeinstellungen unterscheiden sich in der Wellenlänge des jeweils ausgesandten Beleuchtungslichts;
- die Mikroskopeinstellungen unterscheiden sich in der Wellenlänge des nachgewiesenen Detektionslichts;
- die Mikroskopeinstellungen unterscheiden sich in einer numerischen Apertur, mit der das Beleuchtungslicht in das Medium gestrahlt wird;

- die Mikroskopeinstellungen unterscheiden sich in einer Beleuchtungsrichtung, in der das Beleuchtungslicht in das Medium gestrahlt wird;
- die Mikroskopeinstellungen unterscheiden sich in einer Zoomeinstellung einer Detektionsoptik und insbesondere damit in einer Bildfeldgröße.

Relevant ist hierbei wiederum, dass für die unterschiedlichen Mikroskopeinstellungen bekannt ist (etwa durch optische Berechnungsverfahren simuliert oder berechnet wird), wie sich dieser Unterschied auf den Beleuchtungs- und Detektionsstrahlengang und damit auf die Fokuspositionen dieser Messungen auswirkt.

Allgemein wird unter dem Ausdruck "Kalibriermessung" verstanden, dass ein oder mehrere Mikroskopbilder von einer Probe beziehungsweise einem Medium aufgenommen werden, dessen Brechzahl bekannt ist. Die Anzahl aufzunehmender Mikroskopbilder kann insbesondere davon abhängen, welche Fokusposition bestimmt werden soll.

Die Fokusposition kann einen Fokus von Beleuchtungslicht oder Detektionslicht betreffen.

Im Fall von Detektionslicht gibt die Fokusposition an, welche Ebene scharf auf die verwendete Kameraeinrichtung abgebildet wird. Diese Ebene steht quer oder senkrecht zum Detektionsstrahlengang, dessen Richtung zum Probenraum hin auch als z-Richtung bezeichnet wird. Um die Fokusposition zu ermitteln, können nun mehrere Mikroskopbilder aufgenommen werden, bei denen ein strukturiertes Medium / eine strukturierte Probe an verschiedene z-Positionen gefahren wird. Diejenige z-Position, bei der das zugehörige Mikroskopbild die größte Schärfe hat, wird als Fokusposition (in den vorgenannten mathematischen Modellen: Zmax) verwendet.

Allgemein und in der vorgenannten Gleichung soll aber die Bezeichnung Zmax keine Einschränkung hinsichtlich der Richtung bedeuten, in welcher die Fokusposition ermittelt wird. So kann diese Richtung auch in Ausbreitungsrichtung des Beleuchtungslichts ermittelt werden, welche quer zur Detektionsrichtung stehen kann und daher auch als x-Richtung bezeichnet wird. In diesem Fall wird die Fokusposition auch als Xmax bezeichnet, wobei die Erläuterungen zu Zmax auch gleichermaßen für Xmax zu verstehen sind.

Die Strukturierung des Mediums / der Probe ist bedeutsam, damit irgendein Kontrast im Mikroskopbild vorliegt und so eine Schärfe ermittelt werden kann. Daher kann allgemein als strukturiertes Medium ein beliebiges Medium aufgefasst werden, welches zu einem Mikroskopbild mit Helligkeitsunterschieden führt.

Gemäß den obigen Gedanken kann es bevorzugt sein, dass in jeder Kalibriermessung mehrere Mikroskopbilder aufgenommen werden, bei welchen eine Detektionsoptik des Lichtmikroskops, insbesondere ein Detektionsobjektiv, verschiedene Höhenebenen abbildet. Zum Aufnehmen von Bildern der verschiedenen Höhenebenen kann prinzipiell entweder ein Detektionsobjektiv oder eine Probenhalterung in Höhenrichtung verstellt werden. Sodann wird aus den Mikroskopbildern das Mikroskopbild maximaler Schärfe bestimmt. Die Höhenebene, die zum Mikroskopbild maximaler Schärfe gehört, wird als Kalibriermessungs-Fokusposition verwendet. Dieses Verfahren ist beispielsweise bei Durchlichtmessungen oder Fluoreszenzmessungen einer Auflichtanordnung geeignet. Zudem ist dieses Verfahren bei Verwendung einer strukturierten Beleuchtung möglich. In diesem Fall kann die strukturierte Beleuchtung anstelle der strukturierten Probe oder des strukturierten Mediums verwendet werden, was später näher beschrieben wird.

Die Bestimmung der Fokusposition kann für die Probenmessung in analoger Weise erfolgen wie für die Kalibrierungsmessung. So können in der Probenmessung mehrere Probenbilder aufgenommen werden, bei welchen eine Detektionsoptik des Lichtmikroskops verschiedene Höhenebenen abbildet. Darauf wird wiederum aus den Probenbildern das Probenbild maximaler Schärfe bestimmt. Die Höhenebene, die zum Probenbild maximaler Schärfe gehört, wird sodann als Probenmessungs-Fokusposition verwendet.

Die Bestimmung einer Fokusposition ist auch in einfacher Weise möglich, wenn eine strukturierte Beleuchtung verwendet wird, welche quer, insbesondere senkrecht, zum Detektionsstrahlengang auf die Probe geleitet wird. Dies ist insbesondere bei der Lichtblatt-Mikroskopie oder Light Sheet Fluorescence Microscopy der Fall. Eine Position eines strukturierten Beleuchtungsmusters im Probenbereich hängt von der Brechzahl des Probenmediums beziehungsweise des bei einer Kalibrierungsmessung verwendeten Mediums ab. Daher kann auch die Position des strukturierten Beleuchtungsmusters ermittelt und für die Bestimmung des Brechungsindex verwendet werden. Somit muss das Probenmedium selbst keine bildkontrasterzeugende Struktur aufweisen. Es genügt, wenn das Beleuchtungslicht einen Helligkeitskontrast in der Probe erzeugt. Unter strukturiertem Beleuchtungslicht kann in diesem Zusammenhang allgemein verstanden werden, dass das Beleuchtungslicht innerhalb des Probenbereichs einen Fokus hat. Beispielsweise kann ein Lichtstrahl mit rundem Querschnitt verwendet werden, welcher durch die Beleuchtungsoptik auf einen Bereich im Probenraum, welcher unter anderem durch seine Position in z-Richtung gekennzeichnet sein kann, fokussiert wird. Abhängig von der Brechzahl des (Proben-)mediums wird die Strukturierung für unterschiedliche z-Positionen unterschiedlich scharf abgebildet. Wird daher für unterschiedliche z-Positionen das Bild mit maximaler Schärfe der Strukturierung ermittelt, so ergibt sich hieraus die interessierende Kalibriermessungs-Fokusposition analog zur strukturierten Probe.

Weiterhin wird abhängig von der Brechzahl des (Pro-ben-)mediums die Position des Fokus des Beleuchtungslichts beeinflusst. Die Detektionsrichtung steht nun quer zur Beleuchtungsrichtung, so dass in einem aufgenommenen Mikroskopbild die Lage des Fokus des Beleuchtungslichts ermittelt werden kann. In diesem Fall ist die Fokusposition keine z-Position, sondern eine Position in Ausbreitungsrichtung x des Beleuchtungslichts, also eine x-Position, wobei die x- und z-Richtungen quer oder senkrecht zueinander stehen. Auch komplexere strukturierte Beleuchtungen, beispielsweise eine gitterartige Beleuchtung, können hier genutzt werden.

Gemäß diesen Überlegungen kann bevorzugt sein, dass bei der mindestens einen Kalibriermessung das Beleuchtungslicht als strukturiertes Beleuchtungslicht in das Medium bekannter Brechzahl gestrahlt wird, und/oder dass bei der Probenmessung das Beleuchtungslicht als strukturiertes Beleuchtungslicht in das Probenmedium gestrahlt wird. Ein Beleuchtungsstrahlengang steht dabei quer zu einem Detektionsstrahlengang und ein Querschnitt des strukturierten Beleuchtungslichts ändert sich in Ausbreitungsrichtung des strukturierten Beleuchtungslichts. Die Position, an welcher das strukturierte Beleuchtungslicht den geringsten Querschnitt hat, wird als Fokusposition verwendet.

Bei einer bevorzugten Ausführung handelt es sich bei dem strukturierten Beleuchtungslicht um einen fokussierten Lichtstrahl. So kann vorgesehen sein, dass ein Beleuchtungsstrahlengang des Beleuchtungslichts quer zu einem Detektionsstrahlengang des Detektionslichts steht, dass das Beleuchtungslicht fokussiert in das Medium bekannter Brechzahl und/oder das Probenmedium gestrahlt wird, dass bei der Kalibrierungsmessung in dem mindestens einen Mikroskopbild bestimmt wird, an welchem Ort das Beleuchtungslicht einen minimalen Querschnitt hat, und dieser Ort als Kalibriermessungs-Fokusposition verwendet wird, und/oder dass bei der Probenmessung mindestens ein Probenbild aufgenommen und in diesem bestimmt wird, an welchem Ort das Beleuchtungslicht einen minimalen Querschnitt hat, und dieser Ort als Probenmessungs-Fokusposition verwendet wird.

Werden mindestens zwei Kalibriermessungen durchgeführt, so können sich diese zumindest in der Aussendung des Beleuchtungslichts in folgender Weise unterscheiden:

- bei einer der Kalibriermessungen liegt ein Fokus des Beleuchtungslichts in Ausbreitungsrichtung vor einer Bildfeldmitte und

- bei einer anderen der Kalibriermessungen liegt der Fokus des Beleuchtungslichts in Ausbreitungsrichtung hinter der Bildfeldmitte.

Hierdurch decken die Kalibriermessungen einen verhältnismäßig großen Bereich möglicher Fokuspositionen ab, so dass Parameter, die hier ermittelt werden, geeignet sind, um aus der Fokusposition, die bei der Probenmessung ermittelt wird, eine Brechzahl abzuleiten. Die vorgenannte Bildfeldmitte kann als Mittelpunkt eines Bilds aufgefasst werden, welches mit der Detektionsoptik und der Kameraeinrichtung aufgenommen wird.

Nachstehend werden klarstellend verschiedene im vorliegenden Text verwendete Begriffe erläutert.

Unter einer wellenlängenabhängigen Brechzahl wird verstanden, dass die Brechzahl für verschiedene Lichtwellenlängen unterschiedliche Werte aufweisen kann.

Eine Probenmessung bezeichnet eine Untersuchung an einem Probenmedium. Im Gegensatz dazu bezeichnet eine Kalibriermessung eine Untersuchung an einem anderen Medium. Dieses unterscheidet sich vom Probenmedium dadurch, dass dessen Brechzahl (und die Wellenlängenabhängigkeit der Brechzahl) vorab bekannt sind. Die Probenmessung und die Kalibriermessung können jeweils mehrere Bildaufnahmen umfassen, bei welchen beispielsweise die Probenposition oder eine Beleuchtungs- oder Detektionseinstellung verändert ist. Relevant ist dabei im Prinzip lediglich, dass aus der Probenmessung beziehungsweise der Kalibriermessung eine Fokusposition des Beleuchtungslichts oder des Detektionslichts im Probenraum, also in dem Probenmedium beziehungsweise des Mediums mit bekannter Brechzahl, bestimmt werden kann.

Unter Detektionslicht kann von der Probe kommendes Licht verstanden werden. Bei diesem kann es sich beispielsweise um an der Probe gestreutes, reflektiertes oder gebeugtes Beleuchtungslicht handeln. Alternativ kann das Detektionslicht auch Fluoreszenz- und/oder Phosphoreszenzlicht sein oder umfassen. Dem Probenmedium können auch Fluorophore, beispielsweise sogenannte Beads (fluoreszierende Kügelchen) oder sogenannte Fiducials (fixe Marker), zugegeben werden, um eine Fokusbestimmung mit Fluoreszenzlicht durchführen zu können.

Das vorgenannte mathematische Modell drückt allgemein eine Abhängigkeit einer Fokusposition von einer Brechzahl des hierbei untersuchten Mediums/Probenmediums aus. So kann das Modell eine Gleichung umfassen, welche zumindest die Fokusposition und die Brechzahl als Variablen umfasst. Sofern eine Kalibrierungsmessung durchgeführt wird, kann dabei dieselbe Gleichung als Modell verwendet werden, womit ein Wert einer Konstanten der Gleichung ermittelt werden kann. Dieser Wert wird sodann für Probenmessungen verwendet.

Die Begriffe "Probe" und "Probenmedium" können auch als Synonyme aufgefasst werden. Alternativ soll der Begriff "Probenmedium" aber auch das Medium kennzeichnen, in welches später die Probe hinzugegeben wird. Die letztere Variante ist vorteilhaft, um die Ausbreitung und die Fokusposition von strukturiertem Beleuchtungslicht im Probenmedium leicht zu ermitteln, ohne dass die Probe selbst eine (hier die Auswertung erschwerende) Auswirkung auf die Fokusposition hat.

Ein Objektiv kann sowohl zum Leiten von Beleuchtungslicht auf die Probe als auch zum Leiten von Detektionslicht, das von der Probe kommt, dienen. Je nach Mikroskopieverfahren können für das Beleuchtungs- und Detektionslicht auch zwei oder mehr verschiedene Objektive verwendet werden, welche vorliegend auch als Beleuchtungsobjektiv und Detektionsobjektiv bezeichnet werden. In diesem Fall kann unter einem Objektiv entweder ein Beleuchtungsobjektiv oder ein Detektionsobjektiv verstanden werden.

Unter einer Kameraeinrichtung können beliebige Mittel verstanden werden, welche ein räumlich aufgelöstes Bild aufnehmen können. So kann die Kameraeinrichtung beispielsweise ein oder mehrere ein- oder zweidimensionale CCD- oder CMOS-Chips umfassen.

Die Steuer- und Auswertemittel des Lichtmikroskops können prinzipiell beliebig gestaltete Rechenmittel sein. Diese können in oder an einem Stativ des Lichtmikroskops integriert sein oder auch beabstandet hiervon vorliegen, beispielsweise in einem Personalcomputer oder einem über Netzwerkmittel verbundenen Computer. Die Steuer- und Auswertemittel können insbesondere dazu eingerichtet sein, die vorliegend als Verfahrensvarianten beschriebenen Ausführungen der Erfindung auszuführen.

Demgemäß sind die als zusätzliche Vorrichtungsmerkmale beschriebenen Eigenschaften der Erfindung auch als Varianten des erfindungsgemäßen Verfahrens aufzufassen, und umgekehrt.

Weitere Vorteile und Merkmale der Erfindung werden nachstehend mit Bezug auf die beigefügten schematischen Figuren beschrieben.

Fig. 1 zeigt ein erstes Ausführungsbeispiel eines erfindungsgemäßen Lichtmikroskops.

Fig. 2 zeigt ein zweites Ausführungsbeispiel eines erfindungsgemäßen Lichtmikroskops.

Fig. 3 zeigt einen Ausschnitt aus Fig. 1 mit einer schematischen Darstellung von Beleuchtungsstrahlengängen zur Erläuterung von Kalibriermessungen.

Gleiche und gleich wirkende Bestandteile sind in den Figuren in der Regel mit denselben Bezugszeichen versehen.

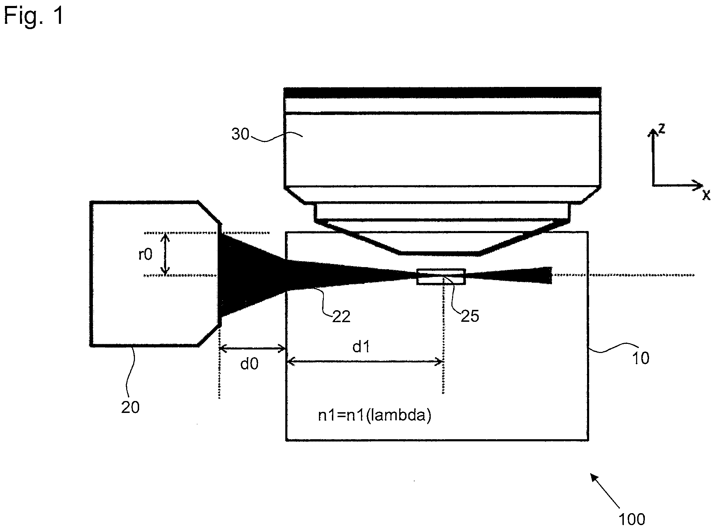

Ein erstes Ausführungsbeispiel eines erfindungsgemäßen Lichtmikroskops 100 ist schematisch in Fig. 1 gezeigt.

Bei diesem Beispiel ist das Lichtmikroskop 100 für die Lichtblattmikroskopie gestaltet. Hierbei steht ein Beleuchtungsstrahlengang, entlang dem Beleuchtungslicht 22 auf einen Probenbereich gelangt, quer zu einem Detektionsstrahlengang, entlang dem Detektionslicht aus dem Probenbereich nachgewiesen wird.

Daher umfasst das Lichtmikroskop 100 ein Beleuchtungsobjektiv 20 und ein hiervon verschiedenes Detektionsobjektiv 30.

Ein zu untersuchendes Probenmedium befindet sich in einer Probenkammer 10. Beispielhaft dargestellt ist, dass das Detektionsobjektiv 30 in das Probenmedium in der Probenkammer 10 eingetaucht ist.

Beleuchtungslicht 22 einer hier nicht dargestellten Beleuchtungslichtquelle wird über das Beleuchtungsobjektiv 20 in das Probenmedium gestrahlt. Die Ausbreitungsrichtung des Beleuchtungslichts 22 im Probenmedium wird als x-Richtung bezeichnet. Quer oder senkrecht hierzu wird in einer als z-Richtung bezeichneten Richtung Detektionslicht über das Objektiv 30 zu einer hier nicht dargestellten Kameraeinrichtung geleitet. Bei dem Detektionslicht kann es sich insbesondere um gestreutes Beleuchtungslicht oder um Fluoreszenzlicht handeln.

Das Beleuchtungslicht 22 wird am Übergang zum Probenmedium abhängig von der Brechzahl des Probenmediums gebrochen. Dies ist am Rand der Probenkammer 10 dargestellt, in einem Abstand d0 vom Beleuchtungsobjektiv 20. Das Beleuchtungsobjektiv 20 erzeugt einen Fokus des Beleuchtungslichts 22 im Probenmedium. Diese Fokusposition, welche eine Strecke d1 vom Rand der Probenkammer 10 entfernt ist, wird mit dem Bezugszeichen 25 gekennzeichnet. Die Fokusposition 25 hängt von der Brechzahl n1 des Probenmediums ab.

Die Fokussierung des Beleuchtungslichts 22, das heißt eine Verkleinerung des Querschnitts des Beleuchtungslichts 22, erfolgt nicht nur in z-Richtung, wie in Figur 1 dargestellt, sondern auch in y-Richtung, das heißt in einer Richtung senkrecht zur Zeichenebene. Die y-Richtung steht senkrecht zum Detektionsstrahlengang, so dass ein Mikroskopbild aufgenommen werden kann, welches sich in x- und y-Richtung erstreckt. Als Fokusposition 25 des Beleuchtungslichts 22 kann sodann die Position in x-Richtung ermittelt werden, an welcher die y-Ausdehnung des Beleuchtungslichts 22 minimal ist.

Das Beleuchtungslicht 22 kann hierbei zum Beispiel einen runden oder kreisförmigen Querschnitt aufweisen. Es sind aber auch andere Formen oder Muster möglich, solange ein Fokus ermittelt werden kann.

Für die Lichtblattmikroskopie kann eine Zylinderlinse vorgesehen sein, durch welche das Beleuchtungslicht allein in z-Richtung fokussiert wird. In y-Richtung erstreckt sich das Beleuchtungslicht hingegen und bildet so ein Lichtblatt oder eine dünne Beleuchtungsschicht im Probenmedium. Damit eine Bestimmung der Fokusposition möglich ist, kann in einem solchen Fall die Zylinderlinse für die Probenmessung entfernt oder ersetzt werden, so dass das Beleuchtungslicht 22 auch in y-Richtung fokussiert wird.

Die x-Position des Fokus gibt nun eine Auskunft über die Brechzahl des Mediums: Hierfür wird ein mathematisches Modell verwendet, in welchem die Fokusposition 25 von der Brechzahl n1 des (Proben-)mediums abhängt. Die Fokusposition 25 ist im vorliegenden Beispiel eine x-Position und kann daher auch als Xmax bezeichnet werden.

Als mathematisches Modell kann beispielsweise die folgende Gleichung verwendet werden:

$$Xmax = c*n1 + Offset$$

wobei c eine Konstante ist, die mit der Brechzahl n1 multipliziert wird und Offset eine hierzu addierte Konstante ist.

Die Konstante c kann für den Aufbau aus Fig. 1 beispielsweise mit Hilfe des Snelliusschen Brechungsgesetzes über die folgende Gleichung veranschaulicht werden:

$$d1 = [ (r0 - NA\, d0) / NA ] \, n1 = c\, n1$$

Dabei bezeichnet d1 den Abstand der Fokusposition 25 vom Rand des Probengefäßes, während d0 den Abstand vom Beleuchtungsobjektiv 20 bis zum Rand des Probengefäßes kennzeichnet. Über die Strecke d0 wirkt ein Brechungsindex n0, der für die obige Gleichung mit n0=1 für Luft angesetzt wurde. NA ist die Beleuchtungsapertur und r0 ist der Radius des Beleuchtungslichts 22 beim Verlassen des Beleuchtungsobjektivs 20.

Die Konstante Offset in der vorherigen Gleichung kann insbesondere von der Lage des Bildfeldes relativ zur Kameraeinrichtung abhängen.

Die beiden Konstanten c und Offset können vorab bekannt sein und/oder durch Kalibrierungsmessungen ermittelt werden, welche später näher beschrieben werden.

Die Kenntnis der Brechzahl n1 ist für eine Bildaufnahme mit möglichst hoher Qualität bedeutsam. Insbesondere wenn die Brechzahl wellenlängenabhängig ist, ist eine Bestimmung der Brechzahl für die momentan verwendete Wellenlänge des Beleuchtungs- oder Detektionslichts vorteilhaft.

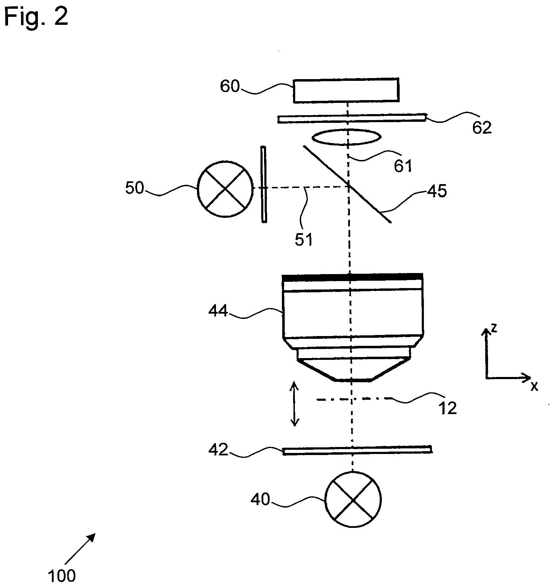

Zu Figur 1 wurde eine Bestimmung der Fokusposition für ein Lichtmikroskop beschrieben, das für Lichtblattmikroskopie geeignet ist. Die Fokusposition kann aber auch bei anders aufgebauten Lichtmikroskopen ermittelt werden. So ist beispielhaft in Figur 2 ein Lichtmikroskop 100 gezeigt, welches für Auflicht- und/oder Durchlichtmessungen geeignet ist.

Dieses Lichtmikroskop 100 umfasst eine Beleuchtungslichtquelle 40 für eine Durchlichtmessung sowie eine Beleuchtungslichtquelle 50 für eine Auflichtmessung. Beleuchtungslicht der Beleuchtungslichtquelle 40 wird über einen Beleuchtungsstrahlengang 41 durch fakultativ vorhandene Filter 42 auf ein Probenmedium 12 geleitet. Durch die Probe hindurchtretendes Beleuchtungslicht, welches als Detektionslicht bezeichnet wird, wird nun entlang einem Detektionsstrahlengang 61 über ein Detektionsobjektiv 44 und fakultative Filter 62 auf eine Kameraeinrichtung 60 geleitet.

Beleuchtungslicht der Beleuchtungslichtquelle 50 wird hingegen in Auflicht auf das Probenmedium 12 geleitet. Dazu wird das Beleuchtungslicht über einen fakultativen Strahlteiler 45 auf einen gemeinsamen Strahlengang mit Detektionslicht geleitet und so über das Objektiv 44 auf das Probenmedium 12 geleitet. Das Probenmedium 12 kann sodann als Detektionslicht beispielsweise Fluoreszenzlicht aussenden. Dieses wird wiederum über das Objektiv 44 zur Kameraeinrichtung 60 geleitet. Das Objektiv 44 fungiert hier demnach sowohl als Detektions- als auch Beleuchtungsobjektiv.

Das Probenmedium 12 umfasst hier eine strukturierte Probe. Darunter kann verstanden werden, dass das Probenmedium 12 über seinen Querschnitt nicht homogen auf Beleuchtungslicht reagiert. Dadurch weist ein mit der Kameraeinrichtung 60 aufgenommenes Bild einen Kontrast auf und erlaubt eine Bestimmung der Bildschärfe.

Es können nun nacheinander Bilder verschiedener Höhenebenen der Probe aufgenommen werden. Die Höhenebenen sind als Ebenen zu verstehen, welche in Richtung des Detektionslichts zueinander versetzt sind. Zum Aufnehmen verschiedener Höhenebenen kann beispielsweise die Probe bewegt werden oder ein Beleuchtungs- oder Detektionsstrahlengang kann so verstellt werden, dass nacheinander verschiedene Höhenebenen scharf auf die Kameraeinrichtung abgebildet werden (also nacheinander verschiedene Höhenebenen optisch konjugiert zu einer Bildebene sind, an welcher die Kameraeinrichtung positioniert ist).

Aus den so aufgenommenen Bildern kann nun eine Fokusposition bestimmt werden. Beispielsweise kann aus den aufgenommenen Bildern das Bild mit höchster Schärfe ausgewählt werden. Die zu diesem Bild gehörige Höhenebene wird als Fokusposition angesehen.

Wie bereits zum Ausführungsbeispiel aus Fig. 1 beschrieben, kann nun aus der Fokusposition auf die Brechzahl n1 des Probenmediums geschlossen werden. Dazu kann die bereits genannte Gleichung verwendet werden, wobei die Fokusposition bei der Ausführung von Fig. 2 eine z-Position ist und daher als Zmax bezeichnet wird:

$$Zmax = c*n1 + Offset$$

Die ermittelte Brechzahl n1 kann sich je nach Messanordnung auf die Wellenlänge des Beleuchtungs- oder Detektionslichts beziehen. Wird die Ausführungsform von Fig. 2 für Fluoreszenzmessungen verwendet, so wird ein Fokus des Detektionslichts ermittelt. Die Brechzahl n1 bezieht sich dann auf das Detektionslicht. Hingegen wird bei der Ausführungsform von Fig. 1 die Fokusposition des Beleuchtungslichts ermittelt, womit die ermittelte Brechzahl n1 sich auf das Beleuchtungslicht bezieht. Bei Durchlichtmessungen können Beleuchtungs- und Detektionslicht die gleiche Wellenlänge haben, so dass sich die vorgenannte Unterscheidung erübrigt.

Bei der Ausführung von Fig. 2 wird eine strukturierte Probe verwendet, damit eine Schärfe in den aufgenommenen Bildern ermittelt werden kann. Alternativ kann aber auch eine strukturierte Beleuchtung verwendet werden. Diese kann beispielsweise wie zu Fig. 1 erläutert durch einen fokussierten Beleuchtungslichtstrahl gebildet sein, welcher sich in x-Richtung, also quer oder senkrecht zur Detektionsrichtung, ausbreitet. Wie zur strukturierten Probe beschrieben, kann nun auch dieser Beleuchtungslichtstrahl in z-Richtung verstellt werden, oder der Detektionsstrahlengang wird so verstellt, dass nacheinander mehrere Höhenebenen aufgenommen werden. Die verschiedenen Höhenebenen sind dabei relativ zum Beleuchtungslichtstrahl zu verstehen. Dadurch kann die Höhenebene ermittelt werden, an welcher der Beleuchtungslichtstrahl fokussiert ist. Das heißt, es wird die z-Position bestimmt, an welcher der Beleuchtungslichtstrahl die geringste Ausdehnung in y-Richtung hat. Aus dieser Fokusposition kann wiederum die Brechzahl des Probenmediums ermittelt werden, wie oben beschrieben.

Im Folgenden werden Kalibrierungsmessungen beschrieben. Mit diesen können Parameter der Gleichung bestimmt werden, welche verwendet wird, um aus der gemessenen Fokusposition auf die Brechzahl zu schließen. Bei der vorgenannten beispielhaften Gleichung sind diese Parameter die Konstanten c und Offset.

Eine Kalibrierungsmessung unterscheidet sich von einer Probenmessung dadurch, dass ein oder mehrere Mikroskopbilder eines Mediums mit bekannter Brechzahl n1 aufgenommen werden. Aus den Mikroskopbildern wird wiederum die Fokusposition Zmax oder Xmax ermittelt. Damit verbleiben als zu bestimmende Unbekannte lediglich die Parameter c und Offset. Diese zwei Parameter können beispielsweise durch zwei Kalibriermessungen ermittelt werden. Alternativ kann auch durch eine Kalibriermessung einer dieser Parameter bestimmt werden, während der andere Parameter in anderer Weise (insbesondere nicht mit dem Lichtmikroskop) bestimmt wird.

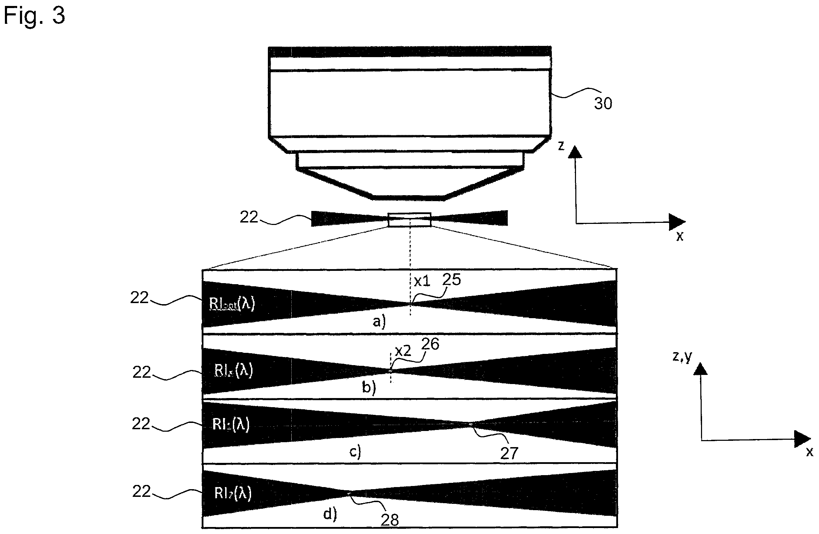

Eine Kalibriermessung zu dem Aufbau aus Fig. 1 wird nachstehend mit Bezug auf Fig. 3 beschrieben. Diese zeigt wiederum Beleuchtungslicht 22, das wie zu Fig. 1 beschrieben fokussiert in x-Richtung durch einen Probenraum gestrahlt wird. Ein Detektionsobjektiv 30 misst wieder senkrecht hierzu, nämlich in z-Richtung.

Fig. 3 zeigt vier verschiedene Fälle a) bis d) von Beleuchtungslicht 22, das in den Probenraum und durch das Medium mit bekannter Brechzahl gestrahlt wird.

Idealerweise sollte eine Fokusposition 25 des Beleuchtungslichts, Xmax, in der Bildfeldmitte x1 liegen, da optische Komponenten des Detektionsstrahlengangs in der Regel hierfür ausgelegt sind. Ein solcher idealer Fall a) ist schematisch in Fig. 3 gezeigt.

Es ist zu beachten, dass die variierende Dicke des dargestellten Lichtstrahls 22 bei den Fällen a) bis d) insbesondere eine y-Dicke ist. Die y-Ausdehnung des Lichtstrahls 22 wird über das Detektionsobjektiv 30 bestimmt.

Bei einem Probenmedium weicht die Fokusposition je nach Brechzahl des Probenmediums von der Bildfeldmitte ab. Dies ist beispielhaft im Fall b) gezeigt, wo eine Fokusposition 26 an einer Stelle x2 beabstandet von x1 liegt.

Die Fälle c) und d) zeigen zwei verschiedene Kalibriermessungen. Diese können sich beispielsweise in der Wellenlänge des Beleuchtungslichts unterscheiden. Das bei den Kalibriermessungen im Probenraum angeordnete Medium kann eine bekannte Brechzahl haben, welche wellenlängenabhängig ist. Dadurch unterscheiden sich die beiden Fokuspositionen 27 und 28 bei den Fällen c) und d). Die beiden Fokuspositionen 27 und 28 entsprechen jeweils einem Wert Xmax, der zu einer jeweiligen Brechzahl n1 gehört. Mit Hilfe der vorgenannten Gleichung $Xmax = c*n1 + Offset$ werden nun die beiden Konstanten c und Offset ermittelt. Anstelle von Beleuchtungslicht unterschiedlicher Wellenlängen können sich die Kalibriermessungen auch durch beispielsweise verschiedene Beleuchtungsrichtungen oder verschiedene Beleuchtungszoomstellungen unterscheiden. Hierdurch werden zwar auch die Konstante c und/oder der Offset verändert; diese Änderung lässt sich jedoch berechnen, so dass auch in diesem Fall durch zwei Kalibriermessungen die zwei unbekannten Parameter c und Offset für eine bestimmte Beleuchtungsrichtung oder Beleuchtungszoomstellung ermittelt werden können.

Sodann kann ein Probenmedium mit unbekannter Brechzahl in den Probenraum gesetzt werden. Mit einer Ermittlung der Fokusposition und den (insbesondere durch die Kalibriermessungen) bekannten Konstanten des verwendeten mathematischen Modells kann in einfacher Weise die Brechzahl des Probenmediums ermittelt werden. Anschließend kann die Probe in das Probenmedium gegeben werden. Alternativ kann die Probe auch vor Ermittlung der Fokusposition bereits in den Probenmedium gegeben werden.

Bei Kenntnis der Brechzahl des Probenmediums können nachfolgende Untersuchungen vorteilhafterweise hieran angepasst werden, womit die Qualität von Bildaufnahmen erhöht werden kann. Beispielsweise kann eine Beleuchtungsoptik verschoben werden oder ein Objektiv kann lateral versetzt werden.

**Patentansprüche**

1. Verfahren zum Bestimmen einer wellenlängenabhängigen Brechzahl (n1) eines Probenmediums (12), das mit einem Lichtmikroskop untersucht wird, bei dem mit dem Lichtmikroskop eine Probenmessung an dem Probenmedium (12) unbekannter Brechzahl (n1) durchgeführt wird, wobei Beleuchtungslicht (22) auf das Probenmedium (12) gestrahlt und vom Probenmedium (12) kommendes Detektionslicht gemessen wird,
   bei dem durch die Probenmessung eine Probenmessungs-Fokusposition (25) des Beleuchtungs- und/oder Detektionslichts im Probenmedium (12) gemessen wird,
   bei dem ein mathematisches Modell, in dem eine Fokusposition (25) im Probenmedium (Zmax, Xmax) von Beleuchtungs- (22) und/oder Detektionslicht abhängig von einer Brechzahl (n1) eines Mediums ausgedrückt wird, verwendet wird, wobei von der Probenmessungs-Fokusposition (25) im Probenmedium (12) auf die Brechzahl (n1) des Probenmediums (12) geschlossen wird.

2. Verfahren nach Anspruch 1,
   **dadurch gekennzeichnet,**
   **dass** das mathematische Modell durch eine Gleichung gebildet ist, in welcher eine Fokusposition (Zmax, Xmax) linear von einer Brechzahl (n1) plus einer Konstanten (Offset) abhängt.

3. Verfahren nach Anspruch 1 oder 2,
   **dadurch gekennzeichnet,**
   **dass** zum Bestimmen von mindestens einem Parameter (c, Offset) des mathematischen Modells mindestens eine Kalibriermessung mit dem Lichtmikroskop durchgeführt wird, in welcher:

   - ein Medium bekannter Brechzahl (n1) mit Beleuchtungslicht (22) beleuchtet wird,
   - von dem Medium bekannter Brechzahl (n1) kommendes Detektionslicht zur Aufnahme von mindestens einem Mikroskopbild gemessen wird und
   - aus dem mindestens einen Mikroskopbild eine Kalibriermessungs-Fokusposition (27, 28) des Beleuchtungs- (22) und/oder des Detektionslichts ermittelt wird, und

   **dass** mit Hilfe der bekannten Brechzahl (n1) und der ermittelten Kalibriermessungs-Fokusposition (27, 28) mindestens ein Parameter (c, Offset) des mathematischen Modells berechnet wird.

4. Verfahren nach einem der Ansprüche 1 bis 3,
   **dadurch gekennzeichnet,**
   **dass** mindestens zwei Kalibriermessungen durchgeführt werden, wobei sich die Kalibriermessungen in einer oder mehreren der folgenden Weisen unterscheiden:

   - verschiedene Medien mit jeweils bekannter Brechzahl (n1) werden verwendet;
   - verschiedene Probengefäße (10) werden verwendet, deren Geometrie sich in bekannter Weise voneinander unterscheidet;
   - verschiedene Mikroskopeinstellungen werden verwendet, welche die Kalibriermessungs-Fokusposition (27, 28) beeinflussen.

5. Verfahren nach Anspruch 4,

**dadurch gekennzeichnet,**
**dass** die verschiedenen Mikroskopeinstellungen, welche für die mindestens zwei Kalibriermessungen verwendet werden, sich in einer oder mehreren der folgenden Weisen unterscheiden:

- die Mikroskopeinstellungen unterscheiden sich in der Wellenlänge des jeweils ausgesandten Beleuchtungslichts (22);
- die Mikroskopeinstellungen unterscheiden sich in der Wellenlänge des nachgewiesenen Detektionslichts;
- die Mikroskopeinstellungen unterscheiden sich in einer numerischen Apertur (NA), mit der das Beleuchtungslicht (22) in das Medium gestrahlt wird;
- die Mikroskopeinstellungen unterscheiden sich in einer Beleuchtungsrichtung, in der das Beleuchtungslicht (22) in das Medium gestrahlt wird;
- die Mikroskopeinstellungen unterscheiden sich in einer Zoomeinstellung einer Detektionsoptik und damit in einer Bildfeldgröße.

6. Verfahren nach einem der Ansprüche 1 bis 5,
**dadurch gekennzeichnet,**
**dass** in jeder Kalibriermessung mehrere Mikroskopbilder aufgenommen werden, bei welchen eine Detektionsoptik des Lichtmikroskops verschiedene Höhenebenen abbildet,
**dass** aus den Mikroskopbildern das Mikroskopbild maximaler Schärfe bestimmt wird,
**dass** die Höhenebene, die zum Mikroskopbild maximaler Schärfe gehört, als Kalibriermessungs-Fokusposition (27, 28) verwendet wird.

7. Verfahren nach einem der Ansprüche 1 bis 6,
**dadurch gekennzeichnet,**
**dass** in der Probenmessung mehrere Probenbilder aufgenommen werden, bei welchen eine Detektionsoptik des Lichtmikroskops verschiedene Höhenebenen abbildet,
**dass** aus den Probenbildern das Probenbild maximaler Schärfe bestimmt wird, dass die Höhenebene, die zum Probenbild maximaler Schärfe gehört, als Probenmessungs-Fokusposition (25) verwendet wird.

8. Verfahren nach einem der Ansprüche 1 bis 7,
**dadurch gekennzeichnet,**
**dass** bei der mindestens einen Kalibriermessung das Beleuchtungslicht (22) als strukturiertes Beleuchtungslicht (22) in das Medium bekannter Brechzahl (n1) gestrahlt wird, und/oder dass bei der Probenmessung das Beleuchtungslicht (22) als strukturiertes Beleuchtungslicht (22) in das Probenmedium (12) gestrahlt wird,
**dass** ein Beleuchtungsstrahlengang (41) quer zu einem Detektionsstrahlengang (61) steht und ein Querschnitt des strukturierten Beleuchtungslichts (22) sich in Ausbreitungsrichtung des strukturierten Beleuchtungslichts (22) ändert.

9. Verfahren nach einem der Ansprüche 1 bis 8,
**dadurch gekennzeichnet,**
**dass** ein Beleuchtungsstrahlengang (41) des Beleuchtungslichts (22) quer zu einem Detektionsstrahlengang (61) des Detektionslichts steht.

10. Verfahren nach Anspruch 9,
**dadurch gekennzeichnet,**
**dass** das Beleuchtungslicht (22) fokussiert in das Medium bekannter Brechzahl (n1) gestrahlt wird,
**dass** bei der Kalibrierungsmessung in dem mindestens einen Mikroskopbild bestimmt wird, an welchem Ort das Beleuchtungslicht (22) einen minimalen Querschnitt hat, und dieser Ort als Kalibriermessungs-Fokusposition (27, 28) verwendet wird.

11. Verfahren nach Anspruch 9 oder 10,
**dadurch gekennzeichnet,**
**dass** das Beleuchtungslicht (22) fokussiert in das Probenmedium (12) gestrahlt wird,
**dass** bei der Probenmessung mindestens ein Probenbild aufgenommen und in diesem bestimmt wird, an welchem Ort das Beleuchtungslicht (22) einen minimalen Querschnitt hat, und dieser Ort als Probenmessungs-Fokusposition (25) verwendet wird.

12. Verfahren nach einem der Ansprüche 9 bis 11,
**dadurch gekennzeichnet,**
**dass** mindestens zwei Kalibriermessungen durchgeführt werden, die sich zumindest in der Aussendung des Beleuchtungslichts (22) so unterscheiden,

- **dass** bei einer der Kalibriermessungen die Kalibriermessungs-Fokusposition (28) des Beleuchtungslichts (22) in Ausbreitungsrichtung vor einer Bildfeldmitte liegt und
- **dass** bei einer anderen der Kalibriermessungen die Kalibriermessungs-Fokusposition (27) des Beleuchtungslichts (22) in Ausbreitungsrichtung hinter der Bildfeldmitte liegt.

13. Verfahren nach einem der Ansprüche 1 bis 12,
**dadurch gekennzeichnet,**
**dass** die ermittelte Brechzahl (n1) des Probenmediums (12) ausgegeben wird oder
**dass** abhängig von der ermittelten Brechzahl (n1) des Probenmediums (12) eine bestimmte Handlungsanweisung an einen Benutzer oder an Steuer- und Auswertemittel zur automatischen oder nicht-automatischen Änderung einer Mikroskopeinstellung ausgegeben wird.

14. Lichtmikroskop mit

einer Beleuchtungslichtquelle (40, 50) zum Aussenden von Beleuchtungslicht (22) in Richtung eines zu untersuchenden Probenmediums (12) und einem Detektionsobjektiv (30, 44) und einer Kameraeinrichtung (60) zum Messen von vom Probenmedium (12) kommendem Detektionslicht,

wobei ein Beleuchtungsobjektiv (20, 44) vorgesehen ist, mit dem ein Fokus des Beleuchtungslichts (22) im Probenmedium (12) erzeugbar ist,

wobei das Detektionsobjektiv (30, 44) und das Beleuchtungsobjektiv (20) entweder voneinander verschiedene Objektive (20, 30) sind oder durch dasselbe Objektiv (44) gebildet sind,

und wobei Steuer- und Auswertemittel vorgesehen sind, in welchen ein mathematisches Modell hinterlegt ist, in dem eine Fokusposition im Probenmedium (Zmax, Xmax) von Beleuchtungs- und/oder Detektionslicht abhängig von einer Brechzahl (n1) eines Mediums ausgedrückt wird,

und wobei Mittel vorgesehen sind zur Bestimmung der Fokusposition im Probenmedium (Zmax, Xmax) von Beleuchtungs- und/oder Detektionslicht und zur Eingabe der Fokusposition (Zmax, Xmax) an die Steuer- und Auswertemittel, und

und wobei die Steuer- und Auswertemittel dazu eingerichtet sind, aus der Fokusposition im Probenmedium (Zmax, Xmax) zu einem zu untersuchenden Probenmedium (12) und mit Hilfe des mathematischen Modells eine Brechzahl (n1) des Probenmediums (12) zu ermitteln.

15. Lichtmikroskop nach Anspruch 14,
**dadurch gekennzeichnet,**
**dass** die Steuer- und Auswertemittel außerdem dazu eingerichtet sind,

- eine Probenmessung an einem Probenmedium (12) unbekannter Brechzahl (n1) durchzuführen,
- mittels der Probenmessung eine Probenmessungs-Fokusposition (25) des Beleuchtungs- und/oder Detektionslichts zu ermitteln,
- die ermittelte Probenmessungs-Fokusposition (25) als einzugebende Fokusposition (Zmax, Xmax) zum Ermitteln der Brechzahl (n1) des Probenmediums (12) zu verwenden.

**Claims**

1. A method for determining a wavelength-dependent refractive index (n1) of a specimen medium (12) which is examined with a light microscope, the method comprising:

performing with the light microscope a specimen measurement of the specimen medium (12) which has an unknown refractive index (n1), wherein illumination light (22) is radiated to the specimen medium (12) and detection light coming from the specimen medium (12) is measured;

measuring a specimen measurement focus position (25) of the illumination and/or detection light in the specimen medium (12) by means of the specimen measurement;

using a mathematical model, in which a focus position (25) in the specimen medium (Zmax, Xmax) of illumination (22) and/or detection light is defined in dependence of a refractive index (n1) of a medium, wherein the refractive index (n1) of the specimen medium (12) is derived from the specimen measurement focus position (25) in the specimen medium (12).

2. The method as defined in claim 1,
**characterized in that** the mathematical model is formed by an equation in which a focus position (Zmax, Xmax) depends linearly from a refractive index (n1) plus a constant (Offset).

3. The method as defined in claim 1 or 2,
**characterized by** performing at least one calibration measurement with the light microscope for determining at least one parameter (c, Offset) of the mathematical model, wherein in the calibration measurement:

- a medium with known refractive index (n1) is illuminated with illumination light (22),
- detection light coming from the medium with known refractive index (n1) is measured for obtaining at least one microscope image, and
- a calibration measurement focus position (27, 28) of the illumination (22) and/or detection light is determined from the at least one microscope image, and

calculating at least one parameter (c, Offset) of the mathematical model based on the known refractive index (n1) and the determined calibration measurement focus position (27, 28).

4. The method as defined in any one of claims 1 to 3,
**characterized by** performing at least two calibration measurements, wherein the calibration measurements differ from each other in one or more of the following ways:

- using different media with a respectively known refractive index (n1);
- using different specimen vessels (10) with geometries that differ from each other in known ways;
- using different microscope settings which influence the calibration measurement focus position (27, 28).

5. The method as defined in claim 4, **characterized in that** the different microscope settings which are used for the at least two calibration measurements differ in one or more of the following ways:

- the microscope settings differ in the wavelength of the respectively emitted illumination light (22);
- the microscope settings differ in the wavelength of the recorded detection light;
- the microscope settings differ in a numerical aperture (NA) with which the illumination light (22) is radiated into the medium;
- the microscope settings differ in an illumination direction in which the illumination light (22) is radiated into the medium;
- the microscope settings differ in a zoom setting of detection optics and thus in an image field size.

6. The method as defined in any one of claims 1 to 5, **characterized by** recording several microscope images in each calibration measurement, wherein for the several microscope images, detection optics of the light microscope image different height planes, determining the microscope image of maximal sharpness out of the microscope images, using the height plane that corresponds to the microscope image of maximal sharpness as calibration measurement focus position (27, 28).

7. The method as defined in any one of claims 1 to 6, **characterized by** recording in the specimen measurement several specimen images for which detection optics of the light microscope image different height planes, determining the specimen image of maximal sharpness out of the specimen images, using the height plane that corresponds to the microscope image of maximal sharpness as specimen measurement focus position (25).

8. The method as defined in any one of claims 1 to 7, **characterized by**:

radiating the illumination light (22) as structured illumination light (22) into the medium with known refractive index (n1) during the at least one calibration measurement, and/or radiating the illumination light (22) as structured illumination light (22) into the specimen medium (12) during the specimen measurement, wherein an illumination beam path (41) is transverse to a detection beam path (61) and a cross-section of the structured illumination light (22) varies in the travel direction of the structured illumination light (22).

9. The method as defined in any one of claims 1 to 8, **characterized by**:

an illumination beam path (41) of the illumination light (22) is transverse to a detection beam path (61) of the detection light.

10. The method as defined in claim 9, **characterized by** the illumination light (22) is focusedly radiated into the medium with known refractive index (n1), determining during the calibration measurement the location in the at least one microscope image at which location the illumination light (22) has a minimal cross-section, and using that location as calibration measurement focus position (27, 28).

11. The method as defined in claim 9 or 10, **characterized by** the illumination light (22) is focusedly radiated into the specimen medium (12), recording during the specimen measurement at least one specimen image and determining in that image at which location the illumination light (22) has a minimal cross-section, and using this location as specimen measurement focus position (25).

12. The method as defined in any one of claims 9 to 11, **characterized by** performing at least two calibration measurements which differ from each other at least in the emission of the illumination light (22) such that:

- for one of the calibration measurements, the calibration measurement focus position (28) of the illumination light (22) is in travel direction in front of an image field center, and
- for another of the calibration measurements, the calibration measurement focus position (27) of the illumination light (22) is in travel direction behind the image field center.

13. The method as defined in any one of the claims 1 to 12, **characterized by** outputting the determined refractive index (n1) of the specimen medium (12) or outputting a certain instruction to a user or to a control and evaluation unit for automatic or non-automatic adjustment of a microscope setting, in dependence of the determined refractive index (n1) of the specimen medium (12).

14. A light microscope comprising an illumination light source (40, 50) for emitting illumination light (22) in direction of a specimen medium (12) to be examined, and
a detection objective (30, 44) and a camera device (60) for measuring detection light coming from the specimen medium (12),
an illumination objective (20, 44) is provided to produce a focus of the illumination light (22) within the specimen medium (12),
wherein the detection objective (30, 44) and the illumination objective (20) are different objectives (20, 30) or are formed by one and the same objective (44), a control and evaluation unit is provided in which a mathematical model is included in which a focus position in the specimen medium (Zmax, Xmax) of illumination and/or detection light is expressed in dependence of a refractive index (n1) of a medium,
and wherein means are povided for determining the focus position (Zmax, Xmax) of the illumination and/or detection light in the specimen medium (12) and for providing the focus position (Zmax, Xmax) to the control and evaluation unit,
and wherein the control and evaluation unit is configured to determine a refractive index (n1) of the specimen medium (12) from the focus position in the specimen medium (Zmax, Xmax) for a specimen medium (12) to be examined and with the help of the mathematical model.

**15.** The light microscope as defined in claim 14, **characterized in that** the control and evaluation unit is furthermore configured to:

- perform a specimen measurement at a specimen medium (12) with unknown refractive index (n1),
- determine by means of the specimen measurement a specimen measurement focus position (25) of the illumination and/or detection light,
- use the determined specimen measurement focus position (25) as focus position (Zmax, Xmax) to be input for determining the refractive index (n1) of the specimen medium (12).

## Revendications

**1.** Procédé pour déterminer un indice de réfraction (n1) dépendant de la longueur d'onde d'un milieu d'échantillonnage (12), lequel est examiné avec un microscope optique, le procédé comprenant :

le fait d'effectuer, avec le microscope optique, une mesure d'échantillon du milieu d'échantillonnage (12), lequel a un indice de réfraction inconnu (n1), tandis que de la lumière d'éclairage (22) est émise sur le milieu d'échantillonnage (12) et que de la lumière de détection provenant du milieu d'échantillonnage (12) est mesurée,
le fait de mesurer une position de mise au point d'une mesure d'échantillonnage (25) de la lumière d'éclairage et/ou de détection dans le milieu d'échantillonnage (12) par le biais de la mesure d'échantillonnage,
le fait d'utiliser un modèle mathématique, dans lequel une position de mise au point (25) dans le milieu d'échantillonnage (Zmax, Xmax) de la lumière d'éclairage (22) et/ou de détection est définie en fonction d'un indice de réfraction (n1) d'un milieu, tandis que l'indice de réfraction (n1) du milieu d'échantillonnage (12) est dérivé de la position de mise au point d'une mesure d'échantillonnage (25) dans le milieu d'échantillonnage (12).

**2.** Le procédé selon la revendication 1 **caractérisé en ce que** le modèle mathématique est formé par le biais d'une équation dans laquelle une position de mise au point (Zmax, Xmax) dépend de manière linéaire d'un indice de réfraction (n1) plus une constante (Offset).

**3.** Le procédé selon la revendication 1 ou 2 **caractérisé en ce que**, pour déterminer au moins un paramètre (c, Offset) du modèle mathématique, au moins une mesure de calibrage est effectuée avec le microscope optique, tandis que dans la mesure de calibrage :

- un milieu ayant un indice de réfraction (n1) connu est éclairé avec de la lumière d'éclairage (22),
- de la lumière de détection provenant du milieu ayant un indice de réfraction (n1) connu est mesuré pour obtenir au moins une image de microscope, et
- une position de mise au point de mesure de calibrage (27, 28) de la lumière d'éclairage (22) et/ou de détection est déterminée à partir de la au moins une image de microscope, et

au moins un paramètre (c, Offset) du modèle mathématique sur la base de l'indice de réfraction (n1) connu et de la position de mise au point de mesure de calibrage (27, 28) déterminée.

**4.** Le procédé selon une des revendications 1 à 3 **caractérisé en ce que** au moins deux mesures de calibrage sont effectuées, tandis que les mesures de calibrage diffèrent les unes des autres de la manière suivante ou de l'une des manières suivantes :

- utilisation de différents milieux ayant un indice de réfraction (n1) connu,
- utilisation de différents récipients d'échantillonnage (10) dont la géométrie varie de l'un à l'autre de manière connue,
- utilisation de différents paramètres de microscope influençant la position de mise au point de mesure de calibrage (27, 28).

5.  Le procédé selon la revendication 4 **caractérisé en ce que** les différents paramètres de microscope utilisés pour les au moins deux mesures de calibrage diffèrent d'une ou plusieurs des façons suivantes :

    - les paramètres de microscope diffèrent concernant la longueur d'onde de la lumière d'éclairage (22) respectivement émise,
    - les paramètres de microscope diffèrent concernant la longueur d'onde de la lumière de détection enregistrée,
    - les paramètres de microscope diffèrent concernant une ouverture numérique (NA) avec laquelle la lumière d'éclairage (22) est émise dans le milieu,
    - les paramètres de microscope diffèrent concernant une direction d'éclairage dans laquelle la lumière d'éclairage (22) est émise dans le milieu,
    - les paramètres de microscope diffèrent concernant un paramètre de zoom d'une optique de détection et ainsi concernant une taille de champ d'image.

6.  Le procédé selon une des revendications 1 à 5 **caractérisé en ce que** plusieurs images de microscope sont enregistrées dans chaque mesure de calibrage, tandis que pour la pluralité d'images de microscope, une optique de détection du microscope optique représente différents niveaux de hauteur, parmi les images de microscope, l'image de microscope ayant une netteté maximale est déterminée, le niveau de hauteur qui correspond à l'image de microscope ayant une netteté maximale est utilisé en tant que position de mise au point de mesure de calibrage (27, 28).

7.  Le procédé selon une des revendications 1 à 6 **caractérisé en ce que**, dans la mesure d'échantillonnage, sont enregistrées plusieurs images d'échantillonnage pour lesquelles une optique de détection du microscope optique représente différents niveaux de hauteur, l'image de l'échantillonnage ayant une netteté maximale est déterminée parmi les images d'échantillonnage, le niveau de hauteur qui correspond à l'image de microscope ayant une netteté maximale est utilisé en tant que position de mise au point d'une mesure d'échantillonnage (25).

8.  Le procédé selon une des revendications 1 à 7

**caractérisé en ce que**
la lumière d'éclairage (22) est émise en tant que lumière d'éclairage (22) structurée dans le milieu ayant un indice de réfraction (n1) connu durant la au moins une mesure de calibrage, et/ou la lumière d'éclairage (22) est émise en tant que lumière d'éclairage (22) structurée dans le milieu d'échantillonnage (12) durant la mesure d'échantillonnage,
une trajectoire de faisceau d'éclairage (41) est transversale par rapport à une trajectoire de faisceau de détection (61) et une section transversale de la lumière d'éclairage (22) structurée varie dans la direction de propagation de la lumière d'éclairage (22) structurée.

9.  Le procédé selon une des revendications 1 à 8 **caractérisé en ce que**
une trajectoire de faisceau d'éclairage (41) de la lumière d'éclairage (22) est transversale par rapport à une trajectoire de faisceau de détection (61) de la lumière de détection.

10.  Le procédé selon la revendication 9 **caractérisé en ce que**
la lumière d'éclairage (22) est émise de manière ciblée dans le milieu ayant un indice de réfraction (n1) connu,
est déterminé, durant la mesure de calibrage, l'emplacement, dans la au moins une image de microscope, auquel la lumière d'éclairage (22) a au moins une section transversale minimale, et cet emplacement est utilisé en tant que position de mise au point de la mesure de calibrage (27, 28).

11.  Le procédé selon la revendication 9 ou 10 **caractérisé en ce que**
la lumière d'éclairage (22) est émise de manière ciblée sur le milieu d'échantillonnage (12), durant la mesure d'échantillonnage, au moins une image d'échantillonnage est enregistrée et, dans cette image, l'emplacement auquel la lumière d'éclairage (22) a une section transversale minimale est déterminé, et cet emplacement est utilisé en tant que position de mise au point de la mesure d'échantillonnage (25).

12.  Le procédé selon une des revendications 9 à 11 **caractérisé en ce que**
sont effectuées au moins deux mesures de calibrage qui diffèrent les unes des autres au moins concernant l'émission de la lumière d'éclairage (22) de telle sorte que :

    - pour l'une des mesures de calibrage, la position de mise au point de mesure de calibrage (28) de la lumière d'éclairage (22) est dans la direction de propagation devant un centre de champ d'image, et

- pour une autre des mesures de calibrage, la position de mise au point de mesure de calibrage (27) de la lumière d'éclairage (22) est dans une direction de propagation derrière le centre de champ d'image.

**13.** Le procédé selon une des revendications 1 à 12 **caractérisé en ce que**

l'indice de réfraction (n1) déterminé du milieu d'échantillonnage (12) est délivré ou

une certaine instruction à un utilisateur ou à une unité de contrôle et d'évaluation pour l'ajustement automatique ou non automatique d'un paramètre de microscope est délivré en fonction de l'indice de réfraction (n1) déterminé du milieu d'échantillonnage (12).

**14.** Un microscope optique comprenant

une source de lumière d'éclairage (40, 50) pour émettre de la lumière d'éclairage (22) en direction d'un milieu d'échantillonnage (12) à examiner, et un objectif de détection (30, 44) et un dispositif d'appareil photo (60) pour mesurer la lumière de détection provenant du milieu d'échantillonnage (12) tandis que

un objectif d'éclairage (20, 44) est prévu pour produire une mise au point de la lumière d'illumination (22) dans le milieu d'échantillonnage (12),

et tandis que l'objectif de détection (30, 44) et l'objectif d'éclairage (20) sont des objectifs (20, 30) différents l'un de l'autre ou sont formés par un seul et unique objectif (44),

une unité de contrôle et d'évaluation est prévue, dans laquelle un modèle mathématique est inclus, dans lequel une position de mise au point dans le milieu d'échantillonnage (Zmax, Xmax) de la lumière d'éclairage et/ou de détection est exprimée en fonction d'un indice de réfraction (n1) d'un milieu,

et tandis que des moyens sont prévus pour déterminer la position de mise au point (Zmax, Xmax) de la lumière d'éclairage et/ou de détection dans le milieu d'échantillonnage (12) et pour fournir la position de mise au point (Zmax, Xmax) à l'unité de contrôle et d'évaluation,

et tandis que l'unité de contrôle et d'évaluation est configurée pour déterminer un indice de réfraction (n1) du milieu d'échantillonnage (12) à partir de la position de mise au point dans le milieu d'échantillonnage (Zmax, Xmax) pour un milieu d'échantillonnage (12) à examiner et à l'aide d'un modèle mathématique.

**15.** Le microscope optique selon la revendication 14 **caractérisé en ce que**

l'unité de contrôle et d'évaluation est par ailleurs configurée pour

- effectuer une mesure d'échantillonnage sur un milieu d'échantillonnage (12) avec un indice de réfraction (n1) inconnu,
- déterminer, grâce à une mesure d'échantillonnage, une position de mise de mesure d'échantillonnage (25) de la lumière d'éclairage et/ou de détection,
- utiliser la position de mise au point de mesure d'échantillonnage (25) déterminée en tant que position de mise au point (Zmax, Xmax) à entrer pour déterminer l'indice de réfraction (n1) du milieu d'échantillonnage (12).

EP 3 374 755 B1

Fig. 1

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 101701912 A

- CN 101082577 A


**In der Beschreibung aufgeführte Nicht-Patentliteratur**

- Measurement of the refractive index of microquantity liquid filled in a capillary and a capillary wall without destruction. **QIANG LI ; XIAOYUN PU.** APPLIED OPTICS. OPTICAL SOCIETY OF AMERICA, 20. Juli 2013, vol. 52, 5318-5326